# EUROPEAN PATENT SPECIFICATION

(11) **EP 3 277 744 B1**
(45) Date of publication and mention of the grant of the patent: **07.10.2020**
(21) Application number: 16716174.4
(22) Date of filing: 25.03.2016
(51) Int. Cl.: C08J 3/00, C08J 3/12, C08J 3/24, C08L 69/00, C08L 25/12

(54) **GLOSS POLYMER ADDITIVES WITH REDUCED INCIDENCE OF DISCOLORATION**
GLANZPOLYMERADDITIVE MIT VERMINDERTEM AUFTRETEN VON VERFÄRBUNG
ADDITIFS POLYMÈRES DE BRILLANCE PRÉSENTANT UNE INCIDENCE RÉDUITE DE DÉCOLORATION

(30) Priority: 31.03.2015 US 201562140744 P
(43) Date of publication of application: 07.02.2018
(73) Proprietor: SABIC Global Technologies B.V., 4612 PX Bergen op Zoom (NL)
(72) Inventor: XU, Jianhua, 6160 GA Geleen (NL); LOWRY, Vern, 6160 GA Geleen (NL); CHEN, Chen, 6160 GA Geleen (NL)
(74) Representative: Sabic Intellectual Property Group
(86) International application number: PCT/EP2016/056691
(87) International publication number: WO 2016/156258

(56) References cited:
- EP-A1- 0 892 005
- US-A- 5 852 156
- US-A1- 2007 010 618

## Description

### CROSS-REFERENCE TO RELATED APPLICATIONS

The present application claims priority to U.S. Provisional Application No. 62/140,744, filed on March 31, 2015.

### TECHNICAL FIELD

The present disclosure related to low gloss polymer additives for producing thermoplastic polymers that have a low degree of gloss.

### BACKGROUND

Thermoplastics having a low gloss finish are useful in the manufacture of articles and components for a wide range of applications, including automobile components, decorative articles, housings for electronic appliances, and siding for commercial or residential dwellings. A low gloss finish for a plastic article can be obtained using different methods. Mechanically texturing a plastic surface has long been used, but this type of surface finish is prone to wear and ultimately increases in gloss with use. Further, mechanical texturing adds processing steps and increases manufacturing costs. Modifications to the moldable thermoplastic composition itself is therefore desirable, whereupon an article can have a low gloss surface immediately after processes such as molding, casting, extruding, or rolling of a suitable low gloss composition. Excellent mechanical properties are also desired in a low gloss thermoplastic composition for use in these applications.

Low gloss finishes for thermoplastic polymers can also be provided by adding gloss-reducing fillers and additives such as particulate silica, or resins with gloss reducing functionality. However, the usefulness of such blends can be mitigated by reduction in or loss of mechanical properties such as, for example, impact strength and ductility retention.

U.S. Pat. No. 5,770,652 discloses a method for producing a low gloss polymer additive that can be added to thermoplastic polymers in order to impart a low gloss finish without depriving the thermoplastic polymer of desirable mechanical properties. The method includes mixing a reactive polymer and a substantially immiscible carrier polymer, and reactively extruding the mixture in the presence of a crosslinking agent and a catalyst. The resulting low gloss additive is cut by a die face cutting pelletizer in to lens-shaped pellets. US2007010618 discloses a polycarbonate composition comprising a low gloss polymer additive being an extruded combination comprising the reaction product of SAN, a bisphenol A polycarbonate, 3,4-epoxycyclohexyl-3,4-epoxycyclohexane carboxylate and dodecylbenzene sulfonic acid.

It has been observed, however, that pelletized low gloss polymer additive that is produced according to the process described in U.S. Pat. No. 5,770,652 contains a high level of dark spots or specks, indicating discolored portions of the pelletized product. The discolored portions that are visible to the naked eye can occur with a frequency of up to 92 count per 100 gram of pellets. This limits the utility of the low gloss polymer additive, especially for use in forming natural color products. However, the source of the darkening discoloration has been unknown. There is a need for low gloss polymer additives that do not have a high incidence of darkening discoloration, so that such additives can be used to produce thermoplastic products bearing a high quality, low gloss finish.

### SUMMARY

The present disclosure provides methods for producing a low gloss polymer additive with a reduced incidence of darkening discoloration comprising forming a mixture of a reactive polymer and a carrier polymer that is substantially immiscible with the reactive polymer, reactively extruding the mixture in the presence of a polyepoxide crosslinking agent and an acid catalyst, thereby crosslinking the mixture, and cutting the crosslinked mixture using a cutting implement under conditions that reduce the temperature at the interface between the implement and the mixture, that reduce the exposure of the implement to oxygen, or both, thereby producing the low gloss polymer additive.

Also disclosed are low gloss polymer additives with a reduced incidence of darkening discoloration that are produced by a process comprising forming a mixture of a reactive polymer and a carrier polymer that is substantially immiscible with the reactive polymer, reactively extruding the mixture in the presence of a polyepoxide crosslinking agent and an acid catalyst, thereby crosslinking the mixture, and, cutting the crosslinked mixture using a cutting implement under conditions that reduce the temperature at the interface between the implement and the mixture, that reduce the exposure of the implement to oxygen, or both, thereby producing the low gloss polymer additive.

The present disclosure also pertains to thermoplastic compositions comprising a low gloss polymer additive that is produced according to methods described herein. Also disclosed are articles that comprise one or more of such thermoplastic compositions.

### DETAILED DESCRIPTION OF ILLUSTRATIVE EMBODIMENTS

It is to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural equivalents unless the context clearly dictates otherwise. Thus, for example, reference to "a polycarbonate polymer" includes mixtures of two or more polycarbonate polymers.

As used herein, the term "combination" is inclusive of blends, mixtures, alloys, reaction products, and the like.

Ranges can be expressed herein as from one particular value, and/or to another particular value. When such a range is expressed, another aspect includes from the one particular value and/or to the other particular value. Similarly, when values are expressed as approximations, by use of the antecedent "about", it will be understood that the particular value forms another aspect. It will be further understood that the endpoints of each of the ranges are significant both in relation to the other endpoint, and independently of the other endpoint.

As used herein, the terms "about" and "at or about" mean that the amount or value in question can be the value designated some other value approximately or about the same. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there arc a variety of additional steps that can be performed it is understood that each of these additional steps can be performed with any specific aspect or combination of aspects of the methods of the disclosure.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt. %," and "wt. %" of a component, which can be used interchangeably, unless specifically stated to the contrary, are based on the total weight of the formulation or composition in which the component is included. For example if a particular element or component in a composition or article is said to have 8% by weight, it is understood that this percentage is relative to a total compositional percentage of 100% by weight.

While typical embodiments have been set forth for the purpose of illustration, the foregoing descriptions should not be deemed to be a limitation on the scope herein. Accordingly, various modifications, adaptations, and alternatives can occur to one skilled in the art without departing from the scope herein.

The present disclosure provides methods for producing low gloss polymer additives with a reduced incidence of darkening discoloration comprising forming a mixture of a reactive polymer and a carrier polymer that is substantially immiscible with the reactive polymer, reactively extruding the mixture in the presence of a crosslinking agent and an acid catalyst, thereby crosslinking the mixture, and cutting the crosslinked mixture using a cutting implement under conditions that reduce the temperature at the interface between the implement and the mixture, that reduce the exposure of the implement to oxygen, or both, thereby producing the low gloss polymer additive.

The present inventors have surprisingly discovered that when the cutting implement that is used to cut the above-referenced crosslinked mixture is used under conditions that reduce the temperature at the interface between the implement and the mixture, that reduce the exposure of the implement to oxygen, or both, the incidence of darkening discoloration in the cut form of the low gloss polymer additive is reduced. Conventional methods of producing low gloss polymer additives result in a pelletized product in which, relative to the presently disclosed low gloss polymer additives, there is high level of dark spots or specks, indicating discolored portions of the pelletized product. For example, in the low gloss polymer additive products that are produced according to conventional methods, the discolored portions that are visible to the naked eye can occur with a frequency of up to 92 count per 100 gram of pellets.

As used herein, the phrase "darkening discoloration" refers to any unwanted, predominantly dark coloration that appears in the low gloss polymer additive in its cut (*e*.*g*., pelletized) form. Darkening discoloration often appears in the form of spots or specks that are large enough to be visible and that appear black or brown to the human eye. Darkening discoloration does not refer to yellowing. When the present disclosure refers to reducing the incidence of darkening discoloration, it means reducing the incidence of dark coloration that is visible to the human eye (for example, having a largest dimension of about 300 microns or more) in the cut form of the instant low gloss polymer additive, relative to the pelletized form of low gloss polymer additive that is prepared according to conventional methods.

U.S. Pat. No. 5,770,652 discloses methods for forming a conventional low gloss polymer additive. The information that U.S. Pat. No. 5,770,652 provides concerning the steps of forming a mixture of a nitrile-containing reactive polymer and a carrier polymer that is substantially immiscible with the reactive polymer, and reactively extruding the mixture in the presence of a polyepoxide crosslinking agent and an acid catalyst may be used in order to complete the corresponding steps of the currently disclosed methods.

For example, the step of forming a mixture of a reactive polymer and a carrier polymer that is substantially immiscible with the reactive polymer may be completed as follows.

In accordance with the present disclosure, the reactive polymer is sufficiently reactive that it will crosslink in the presence of appropriate chemical reagents, *e*.*g*., a catalyst and/or a multi-functional crosslinking agent, so as to form a crosslinked mixture of the reactive polymer and the carrier polymer. In certain aspects, the reactive polymer is a polymer that may crosslink in the presence of appropriate chemical reagents as described herein. The reactive species may be a substituent within the polymer capable of undergoing reaction in the presence of the aforementioned reagents. Examples of suitable reactive polymers are those that contain nitrile groups, carboxylic acid groups, anhydrides, epoxy groups, esters, amines, ethers, or any combination thereof. Preferred reactive polymers according to the present invention include nitrile-containing polymers, such as acrylonitrile. Styrene acrylonitrile (SAN) represents a particularly preferred reactive polymer. It will also be understood by those skilled in the art that the reactive polymer includes not only those polymers which normally contain the reactive species but also those polymers which have been modified or functionalized to contain the reactive species. The reactive polymer may also be selected from the following reactive polymers: polyesters, diene rubbers, silicone rubbers, anhydride copolymers, nylons (which include polyamides), urethanes, glycidyl-methacrylate containing polymers, and mixtures thereof.

The reactive polymer may be present in an amount from 1 wt% to 99 wt%, based on the combined weight of carrier polymer and reactive polymer. In another aspect, the reactive polymer is present in an amount from 30 wt% to 80 wt %. In a yet further aspect, the reactive polymer is present in an amount from 45 wt% to 70 wt%. In another aspect, the reactive polymer is present in an amount of 50 wt% to 70 wt%. In another aspect, the reactive polymer is present in an amount of about 55 wt%, about 56 wt%, about 57 wt%, about 64 wt%, about 65 wt%, or about 66 wt%. In a yet further aspect, the reactive polymer is present in an amount of 55 wt%, 56 wt%, 57 wt%, 64 wt%, 65 wt%, or 66 wt%.

The carrier polymer according to the present disclosure may be a substantially non-reactive polymer or mixture of polymers. A substantially non-reactive polymer is a polymer which is substantially immiscible with the reactive polymer, which acts in a sense as a diluent for the reactive polymer. As used herein, substantially immiscible may refer to the behavior of the carrier polymer to not react to any appreciable extent with the reactive polymer or the crosslinking agent used to crosslink the reactive polymer. Accordingly, the carrier polymer will vary depending upon the combination of the reactive polymer and multi-functional crosslinking agents used in the present methods. Suitable examples of carrier polymers include polycarbonate, polystyrene, polyester, polyolefin, polyimides, and polyphenylene ether, polymethyl methylacrylate, or any mixture thereof. In one preferred embodiment according to the present invention, the carrier polymer comprises a polycarbonate polymer, such as a bisphenol-A polycarbonate. In another preferred embodiment according to the present invention, the carrier polymer comprises polystyrene.

The carrier polymer may be present in an amount from 0 wt% to 99 wt%, based on the combined weight of the carrier polymer and the reactive polymer. In another aspect, the carrier polymer is present in an amount from 10 wt% to 75 wt %. In a further aspect, the carrier polymer is present in an amount from 15 wt% to 60 wt %. In another aspcct, the carrier polymer is present in an amount from 20 wt% to 55 wt %. In a yet further aspect, the carrier polymer is present in an amount from 25 wt% to 50 wt%. In another aspect, the carrier polymer is present in an amount of 30 wt% to 45 wt%. In another aspect, the carrier polymer is present in an amount of about 32 wt%, about 33 wt%, about 34 wt%, about 41 wt%, about 42 wt%, or about 43 wt%. In a yet further aspect, the carrier polymer is present in an amount of 32 wt%, 33 wt%, 34 wt%, 41 wt%, 42 wt%, or 43 wt%.

### Polycarbonate Polymer

The terms "polycarbonate" or "polycarbonates" as used herein includes copolycarbonates, homopolycarbonates and (co)polyester carbonates.

The term polycarbonate can be further defined as compositions have repeating structural units of the formula (1): 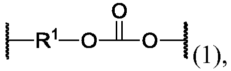 in which at least 60 percent of the total number of R¹ groups are aromatic organic radicals and the balance thereof are aliphatic, alicyclic, or aromatic radicals. In a further aspect, each R¹ is an aromatic organic radical and, more preferably, a radical of the formula (2):

-A¹-Y¹-A²- (2),

wherein each of A¹ and A² is a monocyclic divalent aryl radical and Y¹ is a bridging radical having one or two atoms that separate A¹ from A². In various aspects, one atom separates A¹ from A². For example, radicals of this type include, but are not limited to, radicals such as -O-, -S-, -S(O)-, -S(O₂)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ is preferably a hydrocarbon group or a saturated hydrocarbon group such as methylene, cyclohexylidene, or isopropylidene. Polycarbonate materials include materials disclosed and described in U.S. Patent No. 7,786,246 for the specific purpose of disclosing various polycarbonate compositions and methods for manufacture of the same.

In one aspect, a polycarbonate polymer as disclosed herein can be an aliphatic-diol based polycarbonate. In another aspect, the polycarbonate polymer can comprise a carbonate unit derived from a dihydroxy compound, such as, for example, a bisphenol that differs from the aliphatic diol. In still further aspects, an exemplary polycarbonate polymer includes aromatic polycarbonates conventionally manufactured through a transesterification reaction of an one or more aromatic dihydroxy compound(s) and a carbonic acid diester in the presence of one or more catalyst(s).

In one aspect, non-limiting examples of suitable bisphenol compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxy-3 methylphenyl)cyclohexane 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5 - phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl) sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3 ',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, and the like, as well as combinations comprising at least one of the foregoing dihydroxy aromatic compounds.

In another aspect, exemplary bisphenol compounds can comprise 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxy-t-butylphcnyl)propanc, 3,3-bis(4-hydroxyphenyl)phthalimidine, 2-phenyl-3,3-bis(4-hydroxyphenyl)phthalimidine ("PPPBP"), and 9,9-bis(4-hydroxyphenyl)fluorene. Combinations comprising at least one dihydroxy aromatic compound can also be used. In another aspect, other types of diols can be present in the polycarbonate.

In a yet another aspect, polycarbonates with branching groups can be useful, provided that such branching does not significantly adversely affect desired properties of the polycarbonate. Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethylbenzyl)phenol), 4-chloroformyl phthalic anhydride, trimesic acid, and benzophenone tetracarboxylic acid. In one aspect, a branching agent can be added at a level of 0.05 wt % to 10.0 wt. %, or at a level of about 0.05 to about 10.0 wt %. In a still another aspect, mixtures comprising linear polycarbonates and branched polycarbonates can be used.

The polycarbonate polymer can comprise copolymers comprising carbonate units and other types of polymer units, including ester units, and combinations comprising at least one of homopolycarbonates and copolycarbonates. An exemplary polycarbonate copolymer of this type is a polyester carbonate, also known as a polyester-polycarbonate. Such copolymers further contain carbonate units derived from oligomeric ester-containing dihydroxy compounds (also referred to herein as hydroxy end-capped oligomeric acrylate esters). In another aspect, the polycarbonate does not comprise a separate polymer such as a polyester. In one aspect, an aliphatic-based polycarbonate comprises aliphatic units that are either aliphatic carbonate units derived from aliphatic diols, or a combination of aliphatic ester units derived from aliphatic diacids having greater than 13 carbons.

A preferred combination of reactive polymer and carrier polymer is styrene acrylonitrile copolymer (SAN) as the reactive polymer and polycarbonate or polystyrene as the carrier polymer.

The step of forming a mixture of the reactive polymer and the carrier polymer may be performed in accordance with any suitable method for combining such polymers, such as in accordance with any of the procedures disclosed in U.S. Pat. No. 5,770,652. For example, the step of forming a mixture of the reactive polymer and the carrier polymer may be performed by feeding the reactive polymer and the carrier polymer into an extruder reactor. Extruder reactors include, for example, conventional single-screw or twin-screw extruders. Additional information concerning the extrusion process is described *infra.*

Following the step of forming a mixture of the reactive polymer and the carrier polymer, the mixture is reactively extruded in the presence of a crosslinking agent and an acid catalyst, thereby crosslinking the mixture.

Suitable crosslinking agents include, e.g., polyepoxides, amines, bisoxazolines as well as di-and tri-carboxylic acids. When the crosslinking agent is a polyepoxide, the crosslinking agent may be a diepoxide. Preferred polyepoxides include cycloaliphatic Epoxy Resin ERL-4221, also known as ERL-4221 (Dow Chemical Company, Chicago, IL), CAS No. 2386-87-0.

Other multifunctional epoxides that are expected to function in a manner similar to the preferred diepoxides and that may be used as crosslinking agents in accordance with the present methods include the following:
Simple aliphatic diepoxides, such as butadiene dioxide; pentadiene dioxide; hexadiene dioxide; dodecatriene dioxide; dipentene dioxide; and, 1,2,7,8-diepoxy octane.

Bis(glycidyl ether/ester) epoxides, such as polycondensates of epihalohydrin and diols or diacids, wherein the diol/diacid may be either aliphatic or aromatic, such as adipic acid and phthallic acid; 1,4 butanediol-diglycidyl ether; and, bis-glycidyl ether of bisphenol A.

Cycloaliphatic diepoxides, such as 3,4-epoxycyclohexyl-3,4-epoxycyclohexylcarboxylate, ERL 4229 (Dow Chemical Company, Chicago, IL); dicyclobutadiene dioxide; dicyclopentadiene dioxide; dicyclohexadiene dioxide; cyclooctadiene (1,5)di-epoxide; 1,2,5,6-diepoxy cyclododecane-9; and, bicycloheptadiene diepoxide.

Mixed aliphatic and cycloaliphatic diepoxides, such as vinyl cyclobutene dioxide; vinyl cyclopentadiene dioxide; vinyl cyclohexene dioxide, ERL 4206 (Dow Chemical Company, Chicago, IL); butenecyclobutene dioxide; butenecyclopentene dioxide; butadienecyclobutadiene dioxide; butadienecyclopentadiene dioxide; and, pentadienecyclobutadiene dioxide.

Tri and poly(di/tri)epoxies, such as glycidyl ethers, of novalaks, *e*.*g*., D.E.N.™ 431 (Dow Chemical Company, Chicago, IL) and EPON™ Resin 1031 (Royal Dutch Shell, The Hague, North Holland); tetraglycidyl ether of 1,1,2,2 tetrakis(4-hydroxyphenyl)ethane; 'triglycidyl ether of 1,3,6-trihydroxybenzene; and, triglycidyl isocyanuratc (TGIC).

Epoxidized drying and non-drying oil acids, such as epoxidized tall oils, *e*.*g*., MONOPLEX® S-73 (C.P. Hall Company, Chicago, IL); epoxidized linseed oils; epoxidized soy bean oils, *e*.*g*., PARAPLEX® 6-62 (C.P. Hall Company, Chicago, IL).

The catalyst may be, for example, an organic acid, a mineral acid, a Lewis acid, or a mixture thereof. The purpose of such a catalyst is to accelerate or increase the amount of crosslinking taking place in the reactive extrusion. Exemplary catalysts include zinc chloride, sulfuric acid, and sulfonic acids. Exemplary sulfonic acids include methyl sulfonic acid, p-toulene sulfonic acid, and dodecylbenzene sulfonic acid. When the crosslinking agent comprises a polyepoxide, it the catalyst may be, for example, zinc chloride or a sulfonic acid, such as dodecylbenzene sulfonic acid.

Reactive extrusion, also termed reactive processing or reactive compounding, refers to the performance of chemical reactions during extrusion processing of polymers. In this case, an extrusion device is used as a chemical reactor instead of only as a processing aid. The chemical reaction may take place in the polymer melt phase or, less commonly, in the liquid phase, as when bulk polymerization of monomers is performed in an extruder, or in the solid phase when the polymer is conveyed through the extruder in a solvent slurry.

Reactive extrusion usually takes place in conventional single-screw or twin-screw extruders. An advantage of reactive extrusion is that a solvent need not be present as the reaction medium. Because no solvent stripping or recovery is required, product contamination by solvent or solvent impurities is avoided.

Because of their versatility, most extruder reactors are twin-screw extruders, which possess a segmented barrel, each segment of which can be individually cooled or heated externally. In addition to external heating, a molten material may be shear heated by the resistance of viscous material to the conveying motion of the screw; these processes provide energy for chemical reaction. Extruder screws often have specialized sections or configurations, e.g., high shear mixing sections. Twin-screw extruder screws may be equipped with interchangeable screw elements that provide different degrees of mixing and surface area exposure by varying the depth between screw flights, the individual flight thicknesses, and direction and degree of flight pitch. Kneading blocks may be included as screw elements to provide intensive mixing. By varying the external heating, the screw element configuration, and the clearance between screw and barrel wall in individual barrel segments, the total energy and the degree of mixing of material in each barrel segment may be varied. In this way an extruder may be transformed into a chemical reactor with controlled reaction zones made up of individual barrel segments. In each of these segments sequential chemical processes can take place.

In a typical reactive extrusion process, the reactants are fed into the extruder feed throat where the material is usually heated to initiate reaction or increase the reaction rate. The reactant mixture is conveyed through sequential barrel segments, where degree of mixing and specific energy input bring the reaction to the desired degree of completion within the limits of residence time in the extruder. At this stage the reaction may be quenched by cooling or addition of a catalyst quencher where applicable, and volatile by-products or excess reactants may be removed. Molten polymer is forced from the extruder through a die with one or more openings. The geometry of the die openings is one factor determining the pressure against which the extruder has to pump by the conveying motion of the internal screw. Polymer melt issuing from the die is then subject to cutting and cooling.

An advantage of an extrusion device as a reactor is the combination of several chemical process operations into one piece of equipment with accompanying high space-time yields of product. An extruder reactor is ideally suited for continuous production of material after equilibrium is established in the extruder barrel for the desired chemical processes.

For extruder reactors typical operating conditions are 70°-500°C. Although this entire range of temperature may extend over the length of an extruder, the temperature differential between adjacent barrel segments is often 100°C because of slow heat transfer to and from reactant material. Typical extruder residence times are 10-600 s. Residence time and, hence, the time available for chemical reaction is determined by extruder length, rate of introduction of reactants, and screw speed.

Following the reactive extrusion of the mixture in the presence of the crosslinking agent and an acid catalyst, the crosslinked mixture is cut using a cutting implement under conditions that reduce the temperature at the interface between the implement and the mixture, that reduce the exposure of the implement to oxygen, or both, thereby producing the low gloss polymer additive with a reduced incidence of darkening discoloration. The present inventors have unexpectedly discovered that the interaction between the die face pelletizer and the crosslinked mixture in the conventional process for preparing a low gloss polymer additive is responsible for the appearance of significant amounts of darkening discoloration in the low gloss polymer additive. The present inventors have likewise surprisingly discovered that the incidence of darkening discoloration can be decreased by reducing the temperature at the interface between the mixture and the implement that is used to cut the mixture, by reducing the exposure of the cutting implement to oxygen, or both.

In the reactive extrusion process, the reactive polymer and a substantially immiscible carrier polymer may both be fed into a first feeding port. The catalyst and crosslinking agent may be fed into a second feeding port and a third feeding port, respectively. The crosslinked mixture of the reactive polymer and carrier polymer is extruded from an extruder, and directed to a cutting implement, which cuts the crosslinked mixture into portions, such as pellets. As described throughout the present disclosure, specialized equipment and/or conditions may be used with respect to the step of cutting the crosslinked mixture in order to reduce the incidence of darkening discoloration. After cutting, the cut portions may be dried in dryer to produce a finished low gloss polymer additive.

In the present methods, the cutting implement may be any device that can divide the crosslinked mixture into portions of a desirable size, such as into pellets, discs, or beads. To this end, a die face cutting pelletizer represents a particularly suitable cutting implement, although any device with similar functionality may be used. Those of ordinary skill in the art can readily identify other types of cutting implements that can be utilized in the relevant context, *i*.*e*., cutting a crosslinked mixture into portions.

Any suitable technique for reducing the temperature at the interface between the implement and the mixture and/or for reducing the exposure of the implement to oxygen may be used in accordance with the presently disclosed methods. For example, it is possible to accomplish both objectives by operating the cutting implement at least partially under water. To this end, the cutting implement may be an underwater die-face pelletizer. A die-face pelletizer is a type of pelletizer, or an instrument used to form pellets from a given polymeric material during processing, such as extrusion. More specifically, a die-face pelletizer may be a pelletizer having a die-face or a cooling plate, with extrusion or compounding openings that permit passage of the polymeric material. In a preferred embodiment the cutting implement is an underwater die-face pelletizer that includes thermal insulation between the die face and the die head.

Alternatively, reducing the exposure of the cutting implement to oxygen may be accomplished by cutting the crosslinked mixture using the implement in the presence of an inert gas. Any suitable inert gas, such as a noble gas or nitrogen, may be used for this purpose. The gas maybe cooled, for example, to below room temperature (below about 18.3°C (65°F)) in order to additionally reduce the temperature at the interface between the cutting implement and the crosslinked mixture of the reactive and carrier polymers. The inert gas may be cooled, for example, to 15.5°C (60 °F), 10°C (50°F), 4.4°C (40°F), -1.1°C (30°F), -6.7°C (20°F), -12.2°C (10°F), or -17.8°C (0°F). In a further example, the inert gas may be cooled to about 15.5°C (60 °F), about 10°C (50°F), about 4.4°C (40°F), about -1.1°C (30°F), about -6.7°C (20°F), about -12.2°C (10°F), or about -17.8°C (0°F).

In another embodiment, reducing the temperature at the interface between the cutting implement and the crosslinked mixture may be accomplished by operating the cutting implement under reduced ambient temperature conditions. For example, the cutting implement may be operated under temperature conditions that are reduced by at least -15 °C (5°F), at least - 12.2°C (10°F), at least -6.7°C (20°F), at least -3.9°C (25°F), at least -1.1°C (30°F), at least 4.4°C (40°F), or at least 10°C (50°F) below the ambient temperature that is present under conventional conditions. In a further example, the cutting implement may be operated under temperature conditions that are reduced by at least about -15°C (5°F), at least about -12.2°C (10°F), at least about -6.7°C (20°F), at least about -3.9°C (25°F), at least about -1.1°C (30°F), at least about 4.4°C (40°F), or at least about 10°C (50°F)

In addition to the reduction of the temperature at the interface between the cutting implement and the mixture and or reducing the exposure of the implement to oxygen, the incidence of darkening discoloration may be further reduced by including in the present methods the additional step of reducing accumulations of the crosslinked mixture on the cutting implement. The step of reducing accumulations of the crosslinked mixture on the cutting implement may be accomplished by replacing the cutting implement at one or more desired time intervals over the course of a day of cutting the crosslinked mixture. The present inventors have discovered that while the incidence of darkening discoloration increases over the course of a day of use of a cutting implement to cut the crosslinked low gloss polymer mixture, a single episode of reducing accumulations of the crosslinked mixture on the cutting implement (*i*.*e*., by replacing the cutting implement) "resets" the daily trend and reduces the incidence of darkening discoloration to levels that are typically observed that the beginning of a daily run.

The step of reducing accumulations of the crosslinked mixture on the cutting implement may alternatively be accomplished by at least partially cleaning the cutting implement, for example, at one or more desired time intervals over the course of a day of use of the cutting implement. For example, if the cutting implement is used over an eight hour period of time constituting a standard work day, the cutting implement may be cleaned once per day (e.g., after four hours of use), twice per day (e.g., about every 2.5 hours), three times per day (e.g., about every two hours), or any number of desired times per day at regular or irregular intervals, as desired. The number of times per day that the cutting implement is cleaned will be dictated at least in part by such factors as the practicality of stopping a production run, the ease of accessing and cleaning the cutting implement, and other considerations that will, in view of the present disclosure, be readily apparent to those who are familiar with the production of low gloss polymer additives.

The step of reducing accumulations of the crosslinked mixture on the cutting implement may alternatively be accomplished by using a cutting implement that is designed to resist the accumulation of crosslinked mixture on the surfaces of the cutting implement. For example, the cutting implement may be made from a material or may include a coating that reduces the ability of the crosslinked mixture to accumulate. Exemplary materials and coatings include polytetrafluoroethylene, silicone, ceramic, LiquiGlide-type liquid-impregnated surfaces, and the like.

### Examples

The following examples are set forth so as to provide those of ordinary skill in the art with a complete disclosure and description of how the methods, additives, compositions, and articles claimed herein are made and evaluated, and are intended to be purely exemplary of the invention and are not intended to limit the scope of what the inventors regard as their invention. Efforts have been made to ensure accuracy with respect to numbers (e.g., amounts, temperature, etc.), but some errors and deviations should be accounted for. Unless indicated otherwise, parts are parts by weight, temperature is expressed in degrees Celsius or Fahrenheit, or is at ambient temperature, and pressure is at or near atmospheric.

### Example 1 - Comparative Results for Incidence of Darkening Discoloration Materials and Methods

For the data discussed herein the following materials and methods were used. Table 1 describes the components from which the tested PCMAT low gloss polymer additives were made:

**Table 1**

| **Item** | **Description** | **Part by Weight in Composition** |
|---|---|---|
| SAN | Styrene Acrylonitrile Copolymer | 57 parts by weight relative to SAN + PC |
| PC | Lexan® ML 5221 (SABIC Innovative Plastics, Pittsfield, MA), bisphenol-A polycarbonate with a Melt Flow Rate at 300°C/1.2 kgf about 25 g/10min. | 43 parts by weight relative to SAN + PC |
| ERL | Cycloaliphatic Epoxy Resin ERL-4221 (Dow Chemical Company, Chicago, IL), also known as ERL-4221 (CAS No. 2386-87-0). | 1.94 (3.4% based on SAN) |
| DBSA | Dodecylbenzene Sulfonic Acid | 0.074 (1300 ppm based on SAN) |

The reactive extrusion of the combination of the SAN, PC, ERL, and DBSA components was carried out using a nine-barrel sectioned 58 mm co-rotating twin screw extruder (ZSK 58 Super Compounder; Coperion GmbH, Stuttgart, Germany).

The cutting implement that was used to cut the crosslinked mixture of the SAN and PC components was either a water ring pelletizer (control) or an underwater die-face pelletizer (experimental according to the present invention). The water ring pelletizer was a 6" Beringer horizontal hot face cut water ring pelletizer (available from Nordson XALOY Incorporated, Hickory, NC), and the underwater pelletizer was a EUP 150 underwater pelletizing unit (Econ GmbH, Weisskirchen/Traun, Austria).

The number of black specks in the pelletized low gloss polymer additive was determined using a PS25-C automatic optical sorter (OCS GmbH, Witten, Germany), which is capable of detecting and sorting pellets with impurities using a high-resolution three-chip CCD color camera.

### Results

### Reduction of Appearance of Darkening Discoloration

The PCMAT low gloss polymer additives described in Table 1 were prepared using either a water ring die face pelletizer (control) or an underwater die face pelletizer (experimental). The master feed rate, screw speed, and melt temperature were substantially the same for the control and experimental runs, respectively. During the both of the control and experimental runs, a one lb. sample was taken every 2-4 hours and checked with an automatic optical sorter, which provides the count number for black specks count having the required size for visibility (largest dimension >300 micron).

A comparison between the incidence of darkening discoloration in a low gloss polymer additive that is prepared according to a conventional process, *i*.*e*., using a water ring die face pelletizer, and the incidence of darkening discoloration in a low gloss polymer additive that was prepared according to the present disclosure, namely, wherein the exposure of the cutting implement to oxygen is reduced and the temperature of the interface between the cutting implement and the extruded, crosslinked material is reduced by using an underwater die face pelletizer showed a disparity in discoloration. The incidence of discoloration was found to increase at a greater rate for a low gloss polymer additive prepared according to conventional methods than for a low gloss polymer additive prepared according to the present disclosure. Black speck counts for low gloss polymer additives prepared according to both conventional methods and according to the methods disclosed herein started at substantially the same level at the beginning of the run, but the black speck count for the conventional/control run quickly rose to 42 per 50 gram at about 5 hours after start-up, while the inventive/experimental run only has 20 black specks at 5 hours after start-up. In both cases, the incidence of black specks gradually increases over time. However, the incidence of black specks increased at a much lower rate in the case of the inventive/experimental run, as compared with the conventional/control run. In particular, the inventive/experimental run resulted in the observation of 35 black specks per 50 grams at the end of a continuous 24 hour period in the absence of any shutdown or cleaning of the pelletizer blades. The conventional/control run lasted for only 10 hours following start-up as the incidence of black specks had already risen to unacceptably high levels, 49 per 50 grams, for such a short run. Compared with the conventional/control run, the inventive/experimental run resulted in a reduction in the incidence of visible (>300 micron) black specks by about 50%, thereby representing a significant improvement over the conventional process.

Table 2 provides the results of an additional study (using the same materials and methods as described above) that compared the incidence of darkening discoloration in samples (n = 11) of the low gloss polymer additive PCMAT that was prepared according to a conventional process, *i*.*e*., using a water ring die face pelletizer, and the incidence of darkening discoloration in samples (n = 64) of a low gloss polymer additive that was prepared according to the present disclosure, namely, wherein the exposure of the cutting implement to oxygen is reduced and the temperature of the interface between the cutting implement and the extruded, crosslinked material is reduced by using an underwater die face pelletizer.

**Table 2**

| | **Under Water Pelletizer** | | **Water Ring Pelletizer** | |
|---|---|---|---|---|
| | **Black Speck / 50 gram (>500 micron)** | **Black Speck / 50 gram (>300 micron)** | **Black Speck / 50 gram (>500 micron)** | **Black Speck / 50 gram (>300 micron)** |
| **Average** | 4.82 | 17.80 | 14.75 | 48.64 |
| **Max** | 18.60 | 58.60 | 26.80 | 86.50 |
| **Min** | 0.06 | 2.40 | 3.10 | 12.30 |
| **Standard Deviation** | 4.44 | 13.60 | 7.91 | 26.19 |
| **Count** | 64 | 64 | 11 | 11 |

As shown in Table 2, the mean count for black specks having at least one dimension greater than 500 microns was 14.75 per 50 grams of PCMAT low gloss polymer additive material that was produced using the conventional process, and was 4.82 per 50 grams of PCMAT low gloss polymer additive material that was made using an inventive process, representing a 67% reduction in the incidence of black specks in the case of the inventive process. The mean count for black specks having at least one dimension greater than 500 microns was 48.63 per 50 grams of PCMAT low gloss polymer additive material that was produced using the conventional process, and was 17.80 per 50 grams of PCMAT low gloss polymer additive material that was made according to an inventive process, representing a 63% reduction in the incidence of black specks in the case of the inventive process.

In samples showing the highest incidence of black specks, the samples produced according to the conventional process had a black speck count of 26.8 per 50 grams, and the samples produced according to an inventive process had a black speck count of 18.6 per 50 grams, for black specks having at least one dimension greater than 500 microns. Among the same samples, the black speck count for black specks having at least one dimension greater than 300 was 86.5 for the conventionally produced samples, and 58.6 for the samples produced according to the present invention.

### Example 2 - Effects of Temperature and Oxygen Content

A series of laboratory experiments were performed in order to simulate the discoloration behavior of low gloss polymer additive PCMAT that accumulated on the blades of a cutting implement under different operating conditions, including temperature, air versus inert environment, and the length of time at high temperatures. The tested PCMAT pellets were produced from the components described Example 1, Table 1.

In the experiments, several PCMAT pellets were placed into a sealed heating chamber in a thermogravimetric analysis (TGA) device (Hi-Res TGA 2950, TA Instruments, New Castle, DE) that could accurately control temperature and provide a normal air environment or an inert (N₂) environment, as desired. At 260°C (500°F), which represents the temperature typically observed at the die head of a conventional water ring pelletizer, and in an air environment (∼21% oxygen), considerable darkening of the PCMAT pellets occurred after only 30 minutes of exposure to such temperature and oxygen conditions, and more severe darkening had occurred after 90 minutes . At a lower temperature (204°C/400°F) the PCMAT pellets exhibited only very mild darkening after 90 minutes of exposure to the air environment. On the other hand, at 260°C (500°F) and in an inert environment containing substantially no oxygen, the PCMAT pellets did not significantly discolor, and only displayed a slight increase in yellowness after 30 minutes and even after 90 minutes , relative to freshly cut pellets (not shown). When exposed to a inert (nitrogen) environment and a temperature of 204°C (400°F), there was almost no change in color in the PCMAT pellets, relative to freshly cut pellets. It was thereby found that reducing the temperature and/or decreasing the amount of oxygen to which the low gloss polymer additives are exposed significantly reduces darkening discoloration.

### Example 3 - Low Gloss

PCMAT product was prepared from the materials described in Example 1, Table 1 and processed according to conventional methods (using a water ring pelletizer), and a second PCMAT product was prepared from the materials described in Example 1, Table 1 and processed using the present inventive methods (using a cutting implement with a reduced interface temperature and reduced exposure to oxygen, *viz*., an underwater die face pelletizer). The conventional and inventive PCMAT products were respectively combined with a PC/ABS polymer formulation, and the resulting thermoplastic materials were evaluated for the ability of the respective PCMAT additives to reduce gloss. In order to account for processing variations, three separate samples of inventive PCMAT product were produced and separately combined with PC/ABS polymer formulation.

### Materials and Methods

The PC/ABS + PCMAT formulations were prepared using the components listed in Table 3:

**Table 3**

| **Item** |
|---|
| PCMAT (Conventional or Inventive) |
| PC Low Flow |
| PC Hi Flow |
| ABS Resin |
| SAN |
| Anti Oxidant |
| Phosphite stabilizer |

The PC/ABS thermoplastic polymer with PCMAT low gloss polymer additive was prepared using a five-barrel sectioned 33 mm co-rotating twin screw extruder (Leistritz AG, Nuernberg, Germany) equipped with a single auger-fed feeder, a two-strand die face, a water bath and a strand pelletizer.

The degree of gloss of the PC/ABS thermoplastic polymers was measured using Micro-Gloss 60-degree handheld gloss meter (BYK-Gardner GmbH, Geretsried, Germany). For purposes of the present disclosure, a gloss value of 30 or less that is obtained with respect to a material using the above-described gloss meter qualifies the material as "low gloss". In contrast, a "high gloss" material can yield a reading of more than 30 and up to 90. The measurements disclosed herein were obtained from a non-patterned plaque of the test material.

### Results

As shown in Table 4, below, it was observed that the degree of gloss of the PC/ABS thermoplastic polymers containing the inventive PCMAT products were substantially the same as the degree of gloss of the PC/ABS thermoplastic polymer containing the conventional PCMAT product.

**Table 4**

| Description | PC/ABS containing conventional PCMAT | PC/ABS containing inventive PCMAT, Sample 1 | PC/ABS containing inventive PCMAT, Sample 2 | PC/ABS containing inventive PCMAT, Sample 3 |
|---|---|---|---|---|
| Gloss @ 60 degree | 14.3 | 15.2 | 15.1 | 15.8 |

## Claims

1. A method for producing a low gloss polymer additive with a reduced incidence of darkening discoloration comprising:
forming a mixture of a reactive polymer and a carrier polymer that is substantially immiscible with the reactive polymer;
reactively extruding the mixture in the presence of a crosslinking agent and an acid catalyst, thereby crosslinking the mixture; and,
cutting the crosslinked mixture using a cutting implement under conditions that reduce the temperature at the interface between the implement and the mixture, that reduce the exposure of the implement to oxygen, or both, thereby producing the low gloss polymer additive.

2. The method according to claim 1 wherein the reactive polymer is present in an amount from 30 wt % to 80 wt % and wherein the carrier polymer is present in an amount from 20 wt % to 55 wt %.

3. The method according to claim 1 or 2, further comprising reducing accumulations of the crosslinked mixture on the cutting implement.

4. The method according to any one of claims 1-3 comprising using an underwater cutting implement.

5. The method according to any one of claims 1-3, comprising reducing the exposure of the implement to oxygen by cutting the crosslinked mixture using the implement in the presence of an inert gas.

6. The method according to any one of claims 1-5 wherein the acid catalyst is an organic acid, a mineral acid, a Lewis acid, or a mixture thereof.

7. The method according to any one of claims 1-6 wherein the reactive polymer contains a nitrile group.

8. The method according to any one of claims 1-7 wherein the reactive polymer is a polyester, a diene rubber, a silicone rubber, an anhydride copolymer, a polyamide, a urethane, a glycidyl-methacrylate containing polymer, or any combination thereof.

9. The method according to any of claims 1-8, wherein said carrier polymer comprises a polycarbonate polymer, a polystyrene polymer, or a mixture thereof.

10. The method according to any of claims 1-9 further comprising reducing accumulations of the crosslinked mixture on the cutting implement.

11. The method according to claim 10 wherein the reducing accumulations of the crosslinked mixture on the cutting implement comprises using an underwater cutting implement.

12. The method according to claim 10, wherein the reducing accumulations of the crosslinked mixture on the cutting implement comprises reducing the exposure of the implement to oxygen by cutting the crosslinked mixture using the implement in the presence of an inert gas.

13. The method according to any one of claims 1-12, wherein the polyepoxide is used in an amount from 0.05 wt % to 10 wt % and wherein the acid catalyst is used in an amount from 0.01 wt % to 1.0 wt %.

## Patentansprüche

1. Verfahren zur Herstellung eines Polymeradditivs mit niedrigem Glanz und verringertem Auftreten von eindunkelnden Verfärbungen, bei dem man:
eine Mischung von einem reaktiven Polymer und einem Trägerpolymer, das im Wesentlichen nicht mit dem reaktiven Polymer mischbar ist, bildet;
die Mischung in Gegenwart eines Vernetzers und eines Säurekatalysators reaktiv extrudiert, wodurch die Mischung vernetzt wird, und
die vernetzte Mischung unter Verwendung eines Schneidwerkzeugs unter Bedingungen, die die Temperatur an der Grenzfläche zwischen dem Werkzeug und der Mischung verringern und/oder die den Kontakt des Werkzeugs mit Sauerstoff verringern, schneidet, wodurch das Polymeradditiv mit niedrigem Glanz hergestellt wird.

2. Verfahren nach Anspruch 1, wobei das reaktive Polymer in einer Menge von 30 Gew.**-% bis 80** Gew.**-% vorliegt und** wobei das Trägerpolymer in einer Menge von 20 Gew.**-% bis** 55 Gew.-**% vorliegt**.

3. Verfahren nach Anspruch 1 oder 2, bei dem man ferner Ansammlungen der vernetzten Mischung an dem Schneidwerkzeug verringert.

4. Verfahren nach einem der Ansprüche 1-3, bei dem man ein Unterwasserschneidwerkzeug verwendet.

5. Verfahren nach einem der Ansprüche 1-3, bei dem man den Kontakt des Werkzeugs mit Sauerstoff durch das Schneiden der vernetzten Mischung unter Verwendung des Werkzeugs in Gegenwart eines Inertgases verringert.

6. Verfahren nach einem der Ansprüche 1-5, wobei es sich bei dem Säurekatalysator um eine organische Säure, eine mineralische Säure, eine Lewis-Säure oder eine Mischung davon handelt.

7. Verfahren nach einem der Ansprüche 1-6, bei dem das reaktive Polymer eine Nitrilgruppe enthält.

8. Verfahren nach einem der Ansprüche 1-7, wobei es sich bei dem reaktiven Polymer um einen Polyester, einen Dienkautschuk, einen Silikonkautschuk, ein Anhydridcopolymer, ein Polyamid, ein Urethan, ein glycidylmethacrylathaltiges Polymer oder eine beliebige Kombination davon handelt.

9. Verfahren nach einem der Ansprüche 1-8, wobei das Trägerpolymer ein Polycarbonatpolymer, ein Polystyrolpolymer oder eine Mischung davon umfasst.

10. Verfahren nach einem der Ansprüche 1-9, bei dem man ferner Ansammlungen der vernetzten Mischung an dem Schneidwerkzeug verringert.

11. Verfahren nach Anspruch 10, wobei das Verringern von Ansammlungen der vernetzten Mischung an dem Schneidwerkzeug umfasst, dass man ein Unterwasserschneidwerkzeug verwendet.

12. Verfahren nach Anspruch 10, wobei das Verringern von Ansammlungen der vernetzten Mischung an dem Schneidwerkzeug umfasst, dass man den Kontakt des Werkzeugs mit Sauerstoff durch das Schneiden der vernetzten Mischung unter Verwendung des Werkzeugs in Gegenwart eines Inertgases verringert.

13. Verfahren nach einem der Ansprüche 1-12, wobei das Polyepoxid in einer Menge von 0,05 Gew.-**% bis 10** Gew.-**%** verwendet wird und wobei der Säurekatalysator in einer Menge von 0,01 Gew.-**% bis 1,0** Gew.**-% verwendet wird**.

## Revendications

1. Procédé pour la production d'un additif polymère de faible brillance ayant une incidence réduite d'altération de couleur noircissante comprenant :
la formation d'un mélange d'un polymère réactif et d'un polymère vecteur qui est pratiquement non miscible avec le polymère réactif ;
l'extrusion de manière réactive du mélange en présence d'un agent de réticulation et d'un catalyseur acide, ce qui réticule ainsi le mélange ; et
la coupe du mélange réticulé à l'aide d'un outil de coupe dans des conditions qui réduisent la température à l'interface entre l'outil et le mélange, qui réduisent l'exposition de l'outil à de l'oxygène, ou les deux, ce qui produit ainsi l'additif polymère de faible brillance.

2. Procédé selon la revendication 1 dans lequel le polymère réactif est présent en une quantité de 30 % en poids à 80 % en poids et dans lequel le polymère vecteur est présent en une quantité de 20 % en poids à 55 % en poids.

3. Procédé selon la revendication 1 ou 2, comprenant en outre la réduction d'accumulations du mélange réticulé sur l'outil de coupe.

4. Procédé selon l'une quelconque des revendications 1-3 comprenant l'utilisation d'un outil de coupe sous l'eau.

5. Procédé selon l'une quelconque des revendications 1-3, comprenant la réduction de l'exposition de l'outil à de l'oxygène par la coupe du mélange réticulé à l'aide de l'outil en présence d'un gaz inerte.

6. Procédé selon l'une quelconque des revendications 1-5 dans lequel le catalyseur acide est un acide organique, un acide minéral, un acide de Lewis ou un mélange de ceux-ci.

7. Procédé selon l'une quelconque des revendications 1-6 dans lequel le polymère réactif contient un groupe nitrile.

8. Procédé selon l'une quelconque des revendications 1-7 dans lequel le polymère réactif est un polyester, un caoutchouc diénique, un caoutchouc de silicone, un copolymère d'anhydride, un polyamide, un uréthanne, un polymère contenant du méthacrylate de glycidyle ou une quelconque association de ceux-ci.

9. Procédé selon l'une quelconque des revendications 1-8, dans lequel ledit polymère vecteur comprend un polymère polycarbonate, un polymère polystyrène ou un mélange de ceux-ci.

10. Procédé selon l'une quelconque des revendications 1-9 comprenant en outre la réduction d'accumulations du mélange réticulé sur l'outil de coupe.

11. Procédé selon la revendication 10 dans lequel la réduction d'accumulations du mélange réticulé sur l'outil de coupe comprend l'utilisation d'un outil de coupe sous l'eau.

12. Procédé selon la revendication 10, dans lequel la réduction d'accumulations du mélange réticulé sur l'outil de coupe comprend la réduction de l'exposition de l'outil à de l'oxygène par la coupe du mélange réticulé à l'aide de l'outil en présence d'un gaz inerte.

13. Procédé selon l'une quelconque des revendications 1-12, dans lequel le polyépoxyde est utilisé en une quantité de 0,05 % en poids à 10 % en poids et dans lequel le catalyseur acide est utilisé en une quantité de 0,01 % en poids à 1,0 % en poids.
